# EUROPEAN PATENT SPECIFICATION

(11) **EP 4 403 561 B1**
(45) Date of publication and mention of the grant of the patent: **10.06.2026**
(21) Application number: 21960320.6
(22) Date of filing: 15.10.2021
(51) Int. Cl.: C07F 9/30, C08K 5/5313, C09K 21/12, C08L 77/06, C08K 5/00

(54) **HYBRID DIALKYLPHOSPHINIC ACID SALT, AND PREPARATION METHOD THEREFOR AND APPLICATION THEREOF**
HYBRIDES DIALKYLPHOSPHINSÄURESALZ UND HERSTELLUNGSVERFAHREN DAFÜR UND ANWENDUNG DAVON
SEL D'ACIDE DIALKYLPHOSPHINIQUE HYBRIDE, SON PROCÉDÉ DE PRÉPARATION ET SON UTILISATION

(43) Date of publication of application: 24.07.2024
(73) Proprietor: Ningbo Institute of Materials Technology & Engineering, Chinese Academy of Sciences, Ningbo, Zhejiang 315201 (CN); Zhejiang Wansheng Co., Ltd, Taizhou, Zhejiang 317000 (CN)
(72) Inventor: YAO, Qiang, Ningbo, Zhejiang 315201 (CN); ZHAO, Yueying, Ningbo, Zhejiang 315201 (CN); CAO, Weihong, Ningbo, Zhejiang 315201 (CN); TANG, Tianbo, Ningbo, Zhejiang 315201 (CN)
(74) Representative: karo IP
(86) International application number: PCT/CN2021/124204
(87) International publication number: WO 2023/060590

(56) References cited:
- CN-A- 104 119 377
- CN-A- 106 279 268
- CN-A- 106 700 539
- CN-A- 111 108 143
- US-A1- 2005 009 941
- US-A1- 2005 137 418

## Description

### TECHNICAL FIELD

The present disclosure relates to a hybrid dialkylphosphinic acid salt, and a preparation method therefor and application thereof, and belongs to the field of preparation of flame retardant polymers.

### BACKGROUND

Dialkylphosphinates, especially aluminum diethylphosphinate, have been widely used as halogen-free flame retardants for polymeric materials. Dialkylphosphinate flame retardant products have a low density and desirable mechanical properties with a relatively low loading of dialkylphosphinates. However, as flame retardants, the existing dialkylphosphinates have limited flame retardant efficiency. For example, poly(metal dialkylphosphinate)s can be used as a flame retardant for glass fiber-free nylons, but they have low flame retardant efficiency and exhibit a large adverse effect on the physical properties of flame retardant polymeric materials. There are also reports on the use of aluminum diisobutylphosphinate as a flame retardant for nylons. Aluminum dipropylphosphinate has high flame retardant efficiency, but low thermal stability. It begins to degrade and volatilize substantially at 300°C, which is detrimental to engineering plastics that require high-temperature processing. Moreover, aluminum diisobutylphosphinate has a poor flame retardancy on polyesters. Furthermore, aluminum diisobutylphosphinate is unfavorable to the physical properties of flame retardant polymers due to a large plasticizing action. US 2005/009941 A1 discloses phosphinic acid salts used in flame retardant materials.

### SUMMARY

In order to solve the above technical problems, the present disclosure provides a hybrid dialkylphosphinic acid salt, and a preparation method and application thereof. The hybrid dialkylphosphinic acid salt has composition of Formula (I). The hybrid dialkylphosphinic acid salt has advantages of low loading levels required, high flame retardant efficiency for various polymers and high economic efficiency.

According to a first aspect of the present disclosure, a hybrid dialkylphosphinic acid salt is provided. The hybrid dialkylphosphinic acid salt is selected from at least one compound having a chemical formula as shown in Formula (I): 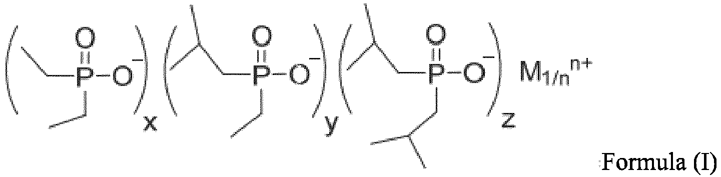
where M is a central atom, and a diethylphosphinate ion, an ethylisobutylphosphinate ion and a diisobutylphosphinate ion are ligands;
the M is selected from metal elements; the metal element is selected from at least one of group IIA, IIIA, IVA and VA metal elements, a transition metal element and a lanthanide metal element;
n is a valence state of the metal M; n is selected from 2, 3 or 4;
0≤x≤0.95; 0.05≤y≤0.8; and 0≤z≤0.5, x+y+z=1, and x+z>0.

In the examples of the present disclosure, in Formula (I), if y is less than 0.05, the flame retardancy is poor. If y is greater than 0.8, the preparation cost is high, the economic efficiency is poor, and thermal stability of the hybrid dialkylphosphinic acid salt is reduced, which is unfavorable to preparation and physical properties of a flame retardant polymer. If x is greater than 0.95, the flame retardancy is poor. If z is greater than 0.5, the preparation cost is high, the economic efficiency is poor, and thermal stability is reduced, which is unfavorable to preparation and physical properties of a flame retardant polymer.

Optionally, a lower limit of x is independently selected from 0, 0.15, 0.2, 0.25, 0.3, 0.35, 0.45, 0.5, 0.55, 0.6, 0.65, 0.7, and 0.03. An upper limit is independently selected from 0.95, 0.9, 0.85, 0.87, and 0.7.

Optionally, a lower limit of y is independently selected from 0.05, 0.1, 0.15, 0.2, 0.13, and 0.29. An upper limit is independently selected from 0.8, 0.7, 0.6, 0.5, 0.4, 0.35, 0.3, 0.25, and 0.68.

Optionally, a lower limit of z is independently selected from 0, and 0.02. An upper limit is independently selected from 0.5, 0.45, 0.4, 0.35, 0.3, 0.25, 0.2, 0.15, 0.1, and 0.05.

Optionally, the group IIA metal element is selected from at least one of Be, Mg, Ca, Sr and Ba;
the group IIIA metal element is Al;
the group IVA metal element is Sn;
the group VA metal element is Sb;
the transition metal element is selected from at least one of Fe, Zn, Cu, Ti, Zr and Mn; and
the lanthanide metal element is Ce.

Optionally, the metal element is selected from at least one of Al, Zn, Ca and Fe.

Optionally, the metal element is Al, and n=3.

Optionally, 0.03≤x≤0.87; 0.13≤y≤0.68; and 0≤z≤0.45.

Optionally, 0.03≤x≤0.7; 0.29≤y≤0.68; and 0.01≤z≤0.45.

Optionally, 0.5≤x≤0.7; 0.29≤y≤0.48; and 0.01≤z≤0.21.

In the examples of the present disclosure, the greater a value of z is, the lower thermal stability the hybrid dialkylphosphinic acid salt has.

The hybrid dialkylphosphinic acid salt in the present disclosure is not a simple physical mixture of different dialkylphosphinates, for example, is not a simple mixture of aluminum diethylphosphinate and aluminum ethylisobutylphosphinate, but a hybrid dialkylphosphinic acid salt may include a diethylphosphinate ion, an ethylisobutylphosphinate ion and a diisobutylphosphinate ion paired with a same aluminum atom. An X-ray diffraction (XRD) pattern of the hybrid dialkylphosphinic acid salt is quite different from those of physical mixtures of simple dialkylphosphinates. The hybrid dialkylphosphinic acid salt having a structure of Formula (I) shows a single peak or overlapping peaks in the strongest absorption peak region in its XRD spectrum. Moreover, the d-spacing calculated from the maximum peak is different from those of aluminum diethylphosphinate and aluminum diisobutylphosphinate. The d value obtained from the maximum peak of aluminum diethylphosphinate is d=9.663, and the d value obtained from the maximum peak of aluminum diisobutylphosphinate is d=12.084. A d value from the maximum peak of the hybrid dialkylphosphinic acid salt having Formula (I) lies between the above two values. Even if there are overlapping peaks, their d values indicate that they are not simple aluminum diethylphosphinate or aluminum diisobutylphosphinate. However, a physical mixture obtained by simple mixing of aluminum diethylphosphinate and aluminum diisobutylphosphinate shows two completely independent peaks in its XRD spectrum, and d values of the two peaks are close to those of aluminum diethylphosphinate and aluminum diisobutylphosphinate respectively.

In the examples of the present disclosure, two independent peaks also appear in the XRD spectrum of the physical mixture obtained by mixing hybrid dialkylphosphinic acid salt having a structure of Formula (I) and aluminum diethylphosphinate. These results strongly indicate that the hybrid dialkylphosphinic acid salt having a structure of Formula (I) obtained according to the present disclosure is not a simple mixture of aluminum diethylphosphinate, aluminum ethylisobutylphosphinate and aluminum diisobutylphosphinate, but contains a structure in which diethylphosphinate, ethylisobutylphosphinate and diisobutylphosphinate are coordinated with a same aluminum atom.

In the examples of the present disclosure, at the same low loading levels, pure diethylphosphinate or diisobutylphosphinate is far inferior to a hybrid salt containing diethylphosphinate and ethylisobutylphosphinate in terms of flame retardancy. Furthermore, flame retardancy is also related to a content of ethylisobutylphosphinate. Only in a specific range of y, the hybrid dialkylphosphinic acid salt has desirable flame retardant properties and thermal properties as well as economic efficiency.

According to a second aspect of the present disclosure, a preparation method of the hybrid dialkylphosphinic acid salt is provided. The preparation method includes:
causing reaction I on a material including a mixture A and a metal element M source in an aqueous phase, and obtaining the hybrid dialkylphosphinic acid salt; where
the mixture A comprises diethylphosphinic acid and/or an alkali metal salt of the diethylphosphinic acid, ethylisobutylphosphinic acid and/or an alkali metal salt of the ethylisobutylphosphinic acid, and diisobutylphosphinic acid and/or an alkali metal salt of the diisobutylphosphinic acid.

Optionally, a molar ratio of diethylphosphinic acid and/or an alkali metal salt of the diethylphosphinic acid to ethylisobutylphosphinic acid and/or an alkali metal salts of the ethylisobutylphosphinic acid to diisobutylphosphinic acid and/or an alkali metal salt of the diisobutylphosphinic acid to the metal element M source is approximately x: y: z: q.

Herein, q=1/n.

Solubilities of the hybrid salts in water vary with M. For a hybrid salt with high solubility, values of x, y, z of the diethylphosphinic acid and/or the alkali metal salt of the diethylphosphinic acid, the ethylisobutylphosphinic acid and/or the alkali metal salt of the ethylisobutylphosphinic acid, the diisobutylphosphinic acid and/or the alkali metal salt of the diisobutylphosphinic acid in a solution can differ from those in the hybrid salt, thus, the molar ratio to the M source can change too. Moreover, in order to obtain more M-containing precipitates, the molar ratio of reactants x, y, z to the M can also be greater than a theoretical calculation value.

In practice, actual values of x, y, z and q can be determined by phosphorus nuclear magnetic resonance.

Optionally, the molar ratio of the diethylphosphinic acid and/or the alkali metal salt of the diethylphosphinic acid to the ethylisobutylphosphinic acid and/or the alkali metal salt of the ethylisobutylphosphinic acid to the diisobutylphosphinic acid and/or the alkali metal salt of the diisobutylphosphinic acid in the mixture A is the same or substantially the same as the ratio of x to y to z in Formula (I).

Optionally, the reaction I is carried out at conditions of temperature of 0°C -250°C, pressure of 0.1 MPa-10 MPa, and time of 0.1 h-20 h.

Optionally, obtaining of the mixture A includes:
introducing ethylene and isobutylene into an aqueous solution comprising phosphinic acid and/or an alkali metal salt of phosphinic acid, and a radical initiator for reaction II, and obtaining the mixture A.

Optionally, a molar ratio of the phosphinic acid and/or the alkali metal salt of the phosphinic acid to the ethylene to the isobutylene is 1: 0.05-1.95: 0.5-1.5.

In an actual reaction, the consumption amount of olefin is higher than a theoretical ratio due to existence of some side reactions, such as long-chain dialkylphosphinates derived from ethylene polymerization.

Optionally, the molar ratio of the phosphinic acid and/or the alkali metal salt of the phosphinic acid to the ethylene to the isobutylene is the same as or close to the values of x, y and z in Formula (I). Optionally, in the reaction II, a reaction rate depends on the values of x, y, and z. The greater the value of z is, the slower the reaction goes. Thus the value of z needs to be controlled in order to obtain economic efficiency. Moreover, it has been found that in the reaction of the phosphinic acid or the alkali metal salt of the phosphinic acid with the ethylene or the isobutylene, the value of y has a maximum value less than 1. After reaching the maximum value, x or z increases so y cannot reach 1. If ethyldiisobutylphosphinate with y=1 needs to be prepared, a reaction intermediate mixture needs to be isolated and purified to remove the diethylphosphinic acid and/or the diisobutylphosphinic acid or their salts, which is not economic.

Specifically, in the reaction II, an order of addition of the ethylene and the isobutylene may be reversed. The ethylene and the isobutylene may be added simultaneously, or partially added first.

Optionally, in the reaction II, the phosphinic acid and/or the alkali metal salt of the phosphinic acid reacts with the isobutylene to obtain intermediates with corresponding values of y and z before reacting substantially completely or completely with the ethylene. Substantially completely means that a total phosphorus content of ethylphosphinate, isobutylphosphinate and hypophosphite in a reaction mixture is less than 5 mol% of a total phosphorus content in the reaction mixture.

Specifically, after the reaction I is finished, the subsequent reaction can be directly carried out without separating diethylphosphinic acid, ethylisobutylphosphinic acid, diisobutylphosphinic acid or a mixture of their alkali metal salts.

Optionally, mass of water in the aqueous solution is 10%-99% of total mass of the radical initiator and the phosphinic acid and/or the alkali metal salt of the phosphinic acid.

Specifically, in the aqueous solution, if the amount of water is too little, a salting-out effect results in low solubility of olefin in the water, and a reaction rate slows low. If the amount of water is too much, a utilization rate of a reaction kettle decreases.

Optionally, mass of water in the aqueous solution is 20%-95% of total mass of the radical initiator and the phosphinic acid and/or the alkali metal salt of the phosphinic acid.

Optionally, mass of water in the aqueous solution is 45%-92% of total mass of the radical initiator and the phosphinic acid and/or the alkali metal salt of the phosphinic acid.

Optionally, mass of water in the aqueous solution is 50%-90% of total mass of the radical initiator and the phosphinic acid and/or the alkali metal salt of the phosphinic acid.

Optionally, mass of water in the aqueous solution is 55%-90% of total mass of the radical initiator and the phosphinic acid and/or the alkali metal salt of the phosphinic acid.

Optionally, the reaction II is carried out at conditions of temperature of 0°C -250°C, time of 0.01 h-50 h, and pressure of 0 MPa-3 MPa.

Specifically, if the temperature of the reaction II is too low, a reaction slows down. If the temperature is too high, hypophosphite is prone to decomposition.

Optionally, the temperature of the reaction II is 10°C-200°C.

Specifically, when the pressure of the reaction II is greater than 3 MPa, requirements for a reaction apparatus are increased, and an operation is difficult.

Optionally, the pressure of the reaction II is 0.2 MPa-1.5 MPa.

Optionally, a molar ratio of the radical initiator to phosphinic acid and/or the alkali metal salt of phosphinic acid is 0.001-0.1: 1.

Optionally, the radical initiator is selected from at least one of an azo initiator, a peroxide initiator and a photoinitiator. The loading level of the radical initiator can be determined according to actual needs.

Optionally, the azo initiator is selected from cationic and/or non-cationic azo initiators, including one or more of azobisisobutyronitrile, 4,4' azobis (4-cyanovaleric acid), 2,2'-azobis (2-methylbutyronitrile), 2,2'-azobis (2-amidinopropane) dichloride, and 2,2'-azobisisobutylamidine dihydrochloride.

Optionally, the peroxide initiator is preferably an inorganic peroxide radical initiator and an organic peroxide radical initiator, particularly preferably one or more of hydrogen peroxide, ammonium persulfate, potassium persulfate, sodium persulfate, sodium percarbonate, benzoyl peroxide, di-tert-butyl peroxide, tert-butyl perbenzoate and peracetic acid.

Preferably, the radical initiator is a peroxide. Particularly preferably, the radical initiator is selected from one of ammonium persulfate, potassium persulfate and sodium persulfate.

Optionally, a molar ratio of the radical initiator to phosphinic acid and/or the alkali metal salt of phosphinic acid is 0.003-0.05: 1.

Optionally, obtaining of the mixture A includes:
introducing isobutylene into an aqueous solution comprising phosphinic acid and/or an alkali metal salt of phosphinic acid and a radical initiator for reaction, after a molar ratio of the introduced isobutylene to total phosphorus of phosphinic acid and/or the alkali metal salt of phosphinic acid reaches (y+2z)/1 in Formula (I), stopping introducing isobutylene, then introducing ethylene for reaction, and obtaining the mixture A.

Optionally, obtaining of the mixture A includes:
introducing isobutylene into an aqueous solution comprising phosphinic acid and/or an alkali metal salt of the phosphinic acid and a radical initiator, then introducing ethylene to complete reaction after isobutylene completely or nearly completely reacts, and obtaining the mixture A.

Optionally, the phosphinic acid and/or the alkali metal salt of the phosphinic acid reacts first with the isobutylene to obtain mono isobutylphosphinic acid or an alkali metal salt of the mono isobutylphosphinic acid having a value of y or a value substantially close to y, and z is controlled to be less than or equal to 0.5. After that, the flow of isobutylene is stopped, the ethylene is added instead, and reaction is continued in the presence of the initiator. Subsequent reaction with a desired metal salt proceeds such that a flame retardant having Formula (I) is obtained.

Optionally, obtaining of the mixture A includes:
introducing the isobutylene and portion of the ethylene into an aqueous solution comprising phosphinic acid and/or an alkali metal salt of the phosphinic acid and a radical initiator for reaction, where a molar ratio of the ethylene to total phosphorus of the phosphinic acid and/or the alkali metal salt of the phosphinic acid is less than (2x+y)/1 in Formula (I), after a molar ratio of the introduced isobutylene to the total phosphorus of the phosphinic acid and/or the alkali metal salt of the phosphinic acid reaches (y+2z)/1 in Formula (I), stopping introducing the isobutylene, then introducing the remaining ethylene for reaction, and obtaining the mixture A.

Optionally, obtaining of the mixture A includes:
introducing the isobutylene and portion of the ethylene into an aqueous solution comprising phosphinic acid and/or an alkali metal salt of the phosphinic acid and a radical initiator, and after the isobutylene and the ethylene react completely or nearly completely, introducing the remaining ethylene for reaction, and obtaining the mixture A.

A molar ratio of the total amount of the ethylene to the isobutylene is 0.33-39: 1.

Optionally, obtaining of the mixture A includes:
introducing portion of the ethylene into an aqueous solution comprising phosphinic acid and/or an alkali metal salt of the phosphinic acid and a radical initiator, where a molar ratio of ethylene to total phosphorus of the phosphinic acid and/or the alkali metal salt of the phosphinic acid is less than (2x+y)/1 in Formula (I), after the ethylene completely reacts, introducing the isobutylene for reaction, after a molar ratio of the introduced isobutylene to the total phosphorus of the phosphinic acid and/or the alkali metal salt of the phosphinic acid reaches (y+2z)/1 in Formula (I), stopping introducing the isobutylene, then introducing the remaining ethylene for reaction, and obtaining the mixture A.

Optionally, obtaining of the mixture A includes:
introducing portion of the ethylene into an aqueous solution comprising phosphinic acid and/or an alkali metal salt of the phosphinic acid and a radical initiator, after the ethylene reacts completely or nearly completely, introducing the isobutylene for reaction, after the isobutylene reacts completely or nearly completely, introducing the remaining ethylene for reaction, and obtaining the mixture A.

A molar ratio of the total amount of the ethylene to the isobutylene is 0.33-39: 1.

Optionally, the metal element M source is selected from at least one of metal element M salts.

Optionally, the metal element M salt is selected from at least one of nitrate, sulfate, hydrochloride, acetate and oxide of the metal element M.

Optionally, the phosphinic acid and/or the alkali metal salt of the phosphinic acid react with the isobutylene and portion of the ethylene simultaneously in the presence of the radical initiator. The amounts of the isobutylene and the ethylene are controlled. When a mole percentage of the isobutylphosphinic acid or an alkali metal salt of the isobutylphosphinic acid in a reaction system is close to a value of y, and a mole percentage of diisobutylphosphinic acid or an alkali metal salt of the diisobutylphosphinic acid is close to a value of z, and z is less than or equal to 0.5, the flow of isobutylene is stopped. Then the remaining ethylene is added, and the reaction is continued until the end in the presence of the initiator. Subsequent reaction with a desired metal salt proceeds, and a hybrid dialkylphosphinic acid salt having Formula (I) is obtained.

According to a third aspect of the present disclosure, a flame retardant is further provided. The flame retardant includes at least one of the hybrid dialkylphosphinic acid salt described above.

Optionally, the flame retardant further includes at least one of phosphate ions, phosphite ions, alkylphosphonate ions and alkylphosphonate ions. A mole percent of these phosphorus-containing acid ions in the flame retardant is less than or equal to 10% of total phosphorus. The mol number of the flame retardant is calculated by the mole number of the phosphorus element included in the flame retardant.

According to a fourth aspect of the present disclosure, a flame retardant material is provided. The flame retardant material includes a flame retardant P and a thermoplastic polymer.

The flame retardant P is selected from at least one of the hybrid dialkylphosphinic acid salt and the flame retardant.

Optionally, a weight percent of the flame retardant P in the flame retardant material is 1%-35%.

Optionally, the flame retardant material includes 1 wt%-35 wt% of a flame retardant P and 65 wt%-99 wt% of a thermoplastic polymer.

The thermoplastic polymer in the present disclosure refers to plastics having characteristics of softening by heating and hardening by cooling.

Specifically, the required amount of the flame retardant P depends on the thermoplastic polymer.

Optionally, a weight percent of the flame retardant P in the flame retardant material is 3%-20%.

Optionally, the flame retardant material further includes a functional additive.

The functional additive is selected from at least one of a reinforcing agent, an anti-dripping agent, a stabilizer, a pigment, a dye, a charring catalyst, a dispersant, a nucleating agent, an inorganic filler and an antioxidant.

Optionally, the reinforcing agent is glass fibers.

Optionally, the anti-dripping agent is Teflon.

Optionally, the inorganic filler is selected from at least one of mica, calcium carbonate, calcium oxide and silica.

Optionally, a weight percent of the functional additive in the flame retardant material is 5%-40%.

Optionally, the flame retardant material further includes a flame retardant Q.

The flame retardant Q is selected from at least one of a nitrogen flame retardant and a boron flame retardant.

Optionally, the nitrogen flame retardant is selected from at least one of melamine cyanurate, melamine polyphosphate and ammonium polyphosphate.

The boron flame retardant is zinc borate.

Optionally, a weight percent of the flame retardant Q in the flame retardant material is 0.5%-20%.

Optionally, the thermoplastic polymer is selected from at least one of polyamide and polyester.

Optionally, the polyamide is selected from at least one of aliphatic polyamide, aromatic polyamide, semi-aromatic polyamide, and a copolymer of semi-aromatic polyamide and aliphatic polyamide.

Those skilled in the art can add other flame retardants B to the flame retardant material according to specific needs, such as nitrogen flame retardants including melamine cyanurate; phosphorus-nitrogen flame retardants including melamine polyphosphate, ammonium polyphosphate, etc.; and boron flame retardants including zinc borate, etc.

Optionally, the flame retardant material includes reinforced glass fibers in an amount of 5%-40% by weight. Other auxiliary agents such as a stabilizer, an anti-dripping agent, a pigment, a dye, a charring catalyst, a dispersant, a flame retardant, a nucleating agent and an inorganic filler such as mica, calcium carbonate, calcium oxide, silica or their mixtures. All ingredients add up to 100% by weight.

According to common knowledge in the art, polyamide, also known as nylon, is a generic term for polymers containing -NH-C (O)-amide groups in structural units, and is synthesized by condensation or ring-opening reactions of one or more kinds of dicarboxylic acid and one or more kinds of diamine, and/or one or more kinds of amino acid, and/or one or more kinds of lactam. The polyamide is generally classified into aliphatic polyamide, aromatic polyamide and semi-aromatic polyamide according to composition of a main chain. The semi-aromatic polyamide means that at least one monomer structure of a synthetic monomer includes an aromatic group.

Optionally, the aliphatic polyamide is optionally selected from one or a mixture of several of a copolymer of polyamide 6 and polyamide 66, polyamide 6 and polyamide 66.

Optionally, the semi-aromatic polyamide may be prepared from any one or more kinds of aromatic dicarboxylic acid and any one or more kinds of aliphatic diamine, or from any one or more kinds of aromatic diamine and any one or more kinds of aliphatic dicarboxylic acid. One or more kinds of dicarboxylic acid, diamine, lactam and amino acid can be optionally added to the system, to prepare polyamide copolymers with corresponding properties. The added dicarboxylic acid is aromatic dicarboxylic acid and/or aliphatic dicarboxylic acid. The added diamine is aromatic diamine and/or aliphatic diamine. The added lactam may be aliphatic lactam or aromatic lactam. The added amino acid may be aromatic amino acid or aliphatic amino acid.

Optionally, the semi-aromatic polyamide is prepared from one or more kinds of aromatic dicarboxylic acid optionally selected from terephthalic acid, isophthalic acid, and naphthalenedicarboxylic acid, and one or more kinds of aliphatic diamine optionally selected from butylene diamine, hexane diamine, octane diamine, decane diamine, and 2-methylpentylene diamine.

Optionally, the semi-aromatic polyamide is prepared from aliphatic diamine, aromatic dicarboxylic acid, and aliphatic dicarboxylic acid.

Optionally, the semi-aromatic polyamide is prepared from aliphatic diamine and aromatic dicarboxylic acid. Optionally, aliphatic dicarboxylic acid may also be added, and a mole fraction of aliphatic dicarboxylic acid accounts for 0-45% of the total amount of dicarboxylic acid, that is, the mole number of aliphatic dicarboxylic acid/(the mole number of aliphatic dicarboxylic acid+the mole number of aromatic dicarboxylic acid)= 0-45%.

Optionally, the aromatic dicarboxylic acid is optionally selected from one or more of terephthalic acid, isophthalic acid and naphthalene dicarboxylic acid. The aliphatic diamine is optionally selected from one or more of butylene diamine, hexane diamine, octane diamine, decane diamine and 2-methylpentylene diamine. The aliphatic dicarboxylic acid is optionally selected from one or more of adipic acid, succinic acid, sebacic acid and suberic acid.

Optionally, the polyamide is selected from one or more of polyhexamethylene terephthalamide (PA6T), polyhexamethylene isophthalamide (PA6I), a terephthalic acid/hexamethylenediamine/caprolactam copolymer (PA6T/6), a terephthalic acid/hexamethylenediamine/adipic acid copolymer (PA6T/66), a terephthalic acid/hexamethylenediamine/adipic acid/isophthalic acid copolymer (PA6T/6I/66), iminocarbonyl-1,4-phenylenecarbonylimino-1,9-nonanediyl (PA9T), polydecanediamide terephthaloyl (PA10T), polyamide 12T (PA12T), a terephthalic acid/hexamethylenediamine/dodecylactam copolymer (PA6T/12), poly-adipic acid metaxylenediamine (MXD6), a terephthalic acid/hexamethylenediamine/2-methylpentylenediamine copolymer (PA6T/2-MPMDT), a terephthalic acid/2,2,4-trimethylhexamethylenediamine/2,4,4-trimethylhexamethylenediamine copolymer. Optionally, the aliphatic polyamide is selected from at least one of polyamide 6, polyamide 66, and a copolymer of polyamide 6 and polyamide 66.

Optionally, the semi-aromatic polyamide is polyphthalamide (PPA).

Optionally, the polyester is polybutylene terephthalate (PBT).

In the examples of the present disclosure, the values of x, y and z in Formula (I) exclude other phosphorus impurities, x+y+z=1, and x+z>0. A flame retardant having a structure of Formula (I) may include trace amounts of other phosphorus ions. Due to impurities in raw materials or impurities generated by a synthesis process, trace amounts of phosphate ions, phosphite ions, alkylphosphonate ions, and alkylphosphonate ions may exist in the flame retardant. Oligomer products, such as ethyl-n-butylphosphinate ions, ethylhexylphosphinate ions, butylbutylphosphinate ions, butylhexylphosphinate ions, derived from ethylene polymerization may also exist as impurities in the flame retardant having Formula (I). However, as long as the total amount of these other phosphorus-containing ions does not exceed 10% mol of the total phosphorus, they do not influence the normal operation of the flame retardant having a structure of Formula (I).

In the examples of the present disclosure, a ratio of x to y to z in Formula (I) may be determined by ³¹P-nuclear magnetic resonance (NMR) after alkaline or acid hydrolysis of the flame retardant. Diethylphosphinate, ethylisobutylphosphinate, and diisobutylphosphinate have different chemical shifts of ³¹P and present three independent peaks in ³¹P-NMR spectra. Peak areas of the three peaks correspond to molar concentrations of the three kinds of phosphinates respectively. Therefore, the values of x, y, and z can be conveniently calculated by a ratio of the peak areas.

The present disclosure can have the following beneficial effects.
(1) The present disclosure provides a hybrid dialkylphosphinic acid salt having a structure of Formula (I). The hybrid dialkylphosphinic acid salt has a low required loading level, high flame retardant efficiency for various polymers and high economic efficiency. The hybrid dialkylphosphinic acid salt overcomes shortcomings of low flame retardant efficiency of diethylphosphinate for polymers, further overcomes shortcomings of high volatility and low flame retardant efficiency for polyester of diisobutylphosphinate, and can be widely used in flame retardant of various polymers that needs to be processed at a high temperature.
(2) The present disclosure provides a preparation method of a hybrid dialkylphosphinic acid salt, which avoids a shortcoming that dialkyl phosphinic acid needs to be independently prepared. Water is used as a reaction solvent, and the process is environmentally friendly. The raw materials are easily available and the economic efficiency is high.

### BRIEF DESCRIPTION OF THE DRAWINGS

FIG. 1 is thermogravimetric analysis of hybrid dialkylphosphinic acid salts with different values of x, y and z, aluminum diethylphosphinate and aluminum diisobutylphosphinate (for convenience of illustration, values shown in a header are 100 times x, y, z).
FIG. 2 shows X-ray diffraction (XRD) curves of hybrid dialkylphosphinic acid salts with different values of x, y and z, aluminum diethylphosphinate and aluminum diisobutylphosphinate (for convenience of illustration, values shown in a header are 100 times x, y, z, and a physical mixture obtained by mixing of aluminum diethylphosphinate and aluminum diisobutylphosphinate).
FIG. 3 is a ³¹P-nuclear magnetic resonance (NMR) spectrum of a hybrid dialkylphosphinic acid salt after alkaline hydrolysis in Example 3.

### DETAILED DESCRIPTION OF THE EMBODIMENTS

The present disclosure is described in detail below in conjunction with examples, but the present disclosure is not limited to these examples.

Unless otherwise specified, raw materials in the examples of the disclosure were purchased commercially.

The raw materials used in implementation are as follows:
PA66 (also known as polyamide 66 or nylon 66): Zytel 70G35 HSL NC010 from DuPont, American, where a glass fiber content is 35% by weight.
PA6 (also known as polyamide 6 or nylon 6): Zytel 73G30L HSL NC010 from DuPont, American, where a glass fiber content is 30% by weight.
PPA (high temperature nylon): HTN 51G35 HSL NC010 from DuPont, American, where a glass fiber content is 35% by weight.
PBT (polybutylene terephthalate): Crastin SK605 NC010 from DuPont, American, where a glass fiber content is 30% by weight.
ADP: Aluminum diethylphosphinate, Exolit OP1230 from Clariant, Germany.
ABP: Aluminum diisobutylphosphinate, prepared according to United States Patent No. 7807737.
MPP: Melamine polyphosphate, from Suzhou Kaima Chemical Technology Co., Ltd.
Antioxidant 1010: tetrakis[β-(3,5-di-tert-butyl-4-hydroxyphenyl) propionic acid] pentaerythritol ester, from Shanghai macklin Biochemical Technology Co., Ltd.
Antioxidant 168: tris[2,4-di-tert-butylphenyl] phosphite, from Strem Chemicals, Inc., from American.
Compound antioxidant: prepared by mixing the antioxidant 1010 (tetrakis[beta-(3, 5-di-tert-butyl-4-hydroxyphenyl) propionic acid] pentaerythritol ester) and the antioxidant 168 (tris[2, 4-di-tert-butylphenyl] phosphite) in a weight ratio of 1:1.
Combustion test standard: GB/T 2408-2008 standard.
Nuclear magnetic resonance (NMR) measurement: using an instrument with a model of AVANCE III 400MHz, from Bruker, Germany.
Nuclear magnetic resonance phosphorus spectrum (³¹P-NMR) test method: 85% phosphoric acid chemical shift is 0, pre-delay is D1=10 seconds, scanning is performed for 32 times, and a peak area ratio is regarded as a molar ratio of diethylphosphinate, ethylisobutylphosphinate and diisobutylphosphinate ions.
A model of an X-ray diffraction (XRD) test instrument is D8 ADVANCE DAVINCI, Bruker, Germany.
A model of an instrument used for TGA thermal weight loss treatment: Q500, from TA Company, USA.

### Example 1

### Preparation of hybrid salt having a structure of Formula (I), where x=0.87, y=0.13, z=0, M=Al, n=3

100 g of sodium phosphinate monohydrate was dissolved in 500 g of water, and was put into a 1 L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 4% was injected at a constant rate of 10 ml/h. Isobutylene was continuously introduced into the reaction kettle. The introduced amount of olefin was measured by a gas flow meter. After 0.3 hour, the flow of the isobutylene was stopped. Ethylene was started to be introduced. The pressure was increased to 0.8 MPa. After 9.0 hours, the flow of the ethylene was stopped. An initiator was continuously injected. After half an hour, the pressure of the reaction kettle did not drop anymore, indicating that the reaction was complete. A colorless transparent reaction solution was obtained by cooling and releasing pressure, N₂ purging and discharging.

Samples were taken during the reaction, and nuclear magnetic resonance was performed. ³¹P-NMR results are shown in Table 1.

**Table 1**

| Time | Double-addition product | | | | Mono-addition product | | | Hypophosphite | Phosphite |
|---|---|---|---|---|---|---|---|---|---|
| | Diethyl | Lo ng-chain alkyl * | Ethyl isobutyl | Diisobutyl | Monoethyl | Monoisobutyl | Monoxide | | |
| 7.5 h | 68.23% | | 10.39% | 0.16% | 16.26% | 1.14% | 0.32% | 2.50% | 1.00% |
| 9. | 82. | 2. | 13. | 0.19 | 0 | 0 | 0.80 | 0 | 0.68 |
| 0 h | 29% | 31% | 72% | % | | | % | | % |

| | | | | | | | | | |
|---|---|---|---|---|---|---|---|---|---|
| * Long-chain dialkylphosphinates include ethyl-n-butylphosphinate, ethylhexylphosphinate, and butylbutylphosphinate. | | | | | | | | | |

690 g of the above solution was slowly added into an aqueous solution containing 89.97g of aluminum sulfate octadecahydrate with a mass concentration of 20%. A reaction temperature was controlled to 70°C, and a pH value was adjusted to be less than or equal to 3.0. A large amount of precipitation was obtained. After 1 hour, addition was complete. Filtering was performed while hot. A filter cake was washed with water to pH>4.5. The filter cake was dried at 120°C to obtain 106.75 g product with a yield of 92.9%. A sample was dissolved in a sodium hydroxide aqueous solution. ³¹P-NMR results gave 85.79% of diethylphosphinate, 12.36% of ethylisobutylphosphinate, 0.45% of diisobutylphosphinate, and the balance was long-chain alkylphosphonate, alkylphosphonate and phosphite impurities. After normalization, x=0.87, y=0.13, and z=0.

An XRD measurement was performed on the sample. Interplanar spacings corresponding to characteristic peaks with a highest relative intensity and a second highest relative intensity determined by XRD were 9.787 Å (100%) and 10.039 Å (66.1%) respectively. The results are shown in Table 2.

**Table 2**

| Characteristic peak number | Interplanar spacing (Å) | Relative intensity (%) |
|---|---|---|
| 1 | 10.039 | 66.1% |
| 2 | 9.787 | 100% |
| 3 | 4.774 | 11.8% |
| 4 | 4.545 | 6.5% |
| 5 | 4.413 | 4.5% |
| 6 | 3.698 | 1.6% |
| 7 | 3.413 | 4.6% |
| 8 | 3.316 | 2.2% |
| 9 | 2.680 | 2.0% |

### Example 2a Preparation of hybrid salt having structure of Formula (I), where x=0.83, y=0.16, z=0.01, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 4% was injected at a constant rate of 10 ml/h. The isobutylene was continuously introduced into the reaction kettle. The introduced amount of olefin was measured by a gas flow meter. After 1.0 hour, the flow of isobutylene was stopped. Ethylene was started to be introduced. The pressure was increased to 0.8 MPa. After 9.0 hours, the flow of ethylene was stopped. An initiator was continuously injected. After half an hour, the pressure of the reaction kettle did not drop anymore, indicating that the reaction was complete. A colorless transparent reaction solution was obtained by cooling and releasing pressure, N₂ purging and discharging.

Samples were taken from the reaction solution, and nuclear magnetic resonance was performed. ³¹P-NMR results are shown in Table 3.

**Table 3**

| Time | Double-addition product | | | | Mono-addition product | | | Hypophosphite | Phosphite |
|---|---|---|---|---|---|---|---|---|---|
| | Diethyl | Long-chain alkyl | Ethyl isobutyl | Diisobutyl | Monoethyl | Monoisobutyl | Monoxide | | |
| 9.0 h | 79.82% | 1.46% | 15.60% | 0.65% | 0.52% | 0 | 1.c10% | 0 | 0.85% |

766 g of the above solution was slowly added into an aqueous solution containing 89.97g of aluminum sulfate octadecahydrate with a mass concentration of 20%. A reaction temperature was controlled to 70°C, and a pH value was adjusted to be less than or equal to 3.0. A large amount of precipitation was obtained. After 1 hour, addition was complete. Filtering was performed while hot. A filter cake was washed with water to pH>4.5. The filter cake was dried at 120°C to obtain 95.2 g of a white-powder product in a yield of 90.7%.

A sample was dissolved in a sodium hydroxide aqueous solution. The ³¹P-NMR results gave 80.35% of diethylphosphinate, 16.05% of ethylisobutylphosphinate, 0.70% of diisobutylphosphinate, and the balance was long-chain alkylphosphonate, alkylphosphonate and phosphite impurities. After normalization, x=0.83, y=0.16, and z=0.01.

An XRD measurement was performed on the sample. Interplanar spacings corresponding to characteristic peaks with a highest relative intensity and a second highest relative intensity determined by XRD were 9.812 Å (100%) and 10.237 Å (86.7%) respectively. The results are shown in Table 4.

**Table 4**

| Characteristic peak number | Interplanar spacing (Å) | Relative intensity (%) |
|---|---|---|
| 1 | 10.237 | 86.7% |
| 2 | 9.812 | 100% |
| 3 | 4.777 | 10.6% |
| 4 | 4.536 | 6.2% |
| 5 | 4.416 | 8.6% |
| 6 | 3.400 | 4.4% |

### Example 2b Preparation of hybrid salt having structure of Formula (I), where x=0.83, y=0.16, z=0.01, M=Cu, n=2

Following the method in Example 2a, copper sulfate was substituted for aluminum sulfate. A hybrid salt of copper was obtained, where x=0.83, y=0.16, and z=0.01. An XRD measurement was performed on a sample. XRD results obtained are shown in Table 5.

**Table 5**

| Characteristic peak number | Interplanar spacing (Å) | Relative intensity (%) |
|---|---|---|
| 1 | 10.603 | 100% |
| 2 | 4.528 | 11.2% |
| 3 | 3.867 | 5.9% |

### Example 3 Preparation of hybrid salt having structure of Formula (I), where x=0.70, y=0.29, z=0.01, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 3.0% was injected at a constant rate of 10 ml/h. The isobutylene was continuously introduced into the reaction kettle. The introduced amount of olefin was measured by a gas flow meter. After 1.5 hours, the flow of isobutylene was stopped. Ethylene was started to be introduced. The pressure was increased to 0.8 MPa. After 10.5 hours, the flow ethylene was stopped. An initiator was continuously injected. After half an hour, the pressure of the reaction kettle did not drop anymore, indicating that the reaction was complete. A colorless transparent reaction solution was obtained by cooling and releasing pressure, N₂ purging and discharging.

Samples were taken during the reaction, and nuclear magnetic resonance was performed. ³¹P-NMR results are shown in Table 6.

**Table 6**

| Time | Double-addition product | | | | Mono-addition product | | | Hypophosphite | Phosphite |
|---|---|---|---|---|---|---|---|---|---|
| | Diethyl | Long-chain alkyl | Ethyl isobutyl | Diisobutyl | Monoethyl | Monoisobutyl | Monoxide | | |
| 1.5 h | 0 | 0 | 0 | 0.10 % | 0 | 19.43% | 0 | 79.92% | 0.55 % |
| 7 h | 63.04% | 0.49% | 26.04% | 0.65% | 5.88% | 1.19% | 0 | 2.5% | 0.2% |
| 10.5 h | 69.75% | 1.16% | 27.88% | 1.01% | 0 | 0 | 0 | 0 | 0.2% |

724 g of the above solution was slowly added into an aqueous solution containing 104.79 g of aluminum sulfate octadecahydrate with a mass concentration of 20%. A reaction temperature was controlled to 70°C, and a pH value was adjusted to be less than or equal to 3.0. A large amount of precipitation was obtained. After 1 hour, addition was complete. Filtering was performed while hot. A filter cake was washed with water to pH>4.5. The filter cake was dried at 120°C to obtain 117.5 g product with a yield of 90.2%.

A sample was dissolved in a sodium hydroxide aqueous solution. The ³¹P-NMR results gave 69.15% of diethylphosphinate, 28.57% of ethylisobutylphosphinate, 1.12% of diisobutylphosphinate, and the balance was long-chain alkylphosphonate impurities. After normalization, x=0.70, y=0.29, and z=0.01.

An XRD measurement was performed on the sample. Interplanar spacings corresponding to characteristic peaks with a highest relative intensity and a second highest relative intensity determined by XRD were 10.407 Å (100%) and 9.902 Å (47.4%) respectively. The results are shown in Table 7.

**Table 7**

| Characteristic peak number | Interplanar spacing (Å) | Relative intensity (%) |
|---|---|---|
| 1 | 10.407 | 100% |
| 2 | 9.902 | 47.4% |
| 3 | 4.787 | 3.9% |
| 4 | 4.546 | 2.7% |
| 5 | 4.435 | 13.8% |
| 6 | 3.774 | 2.7% |

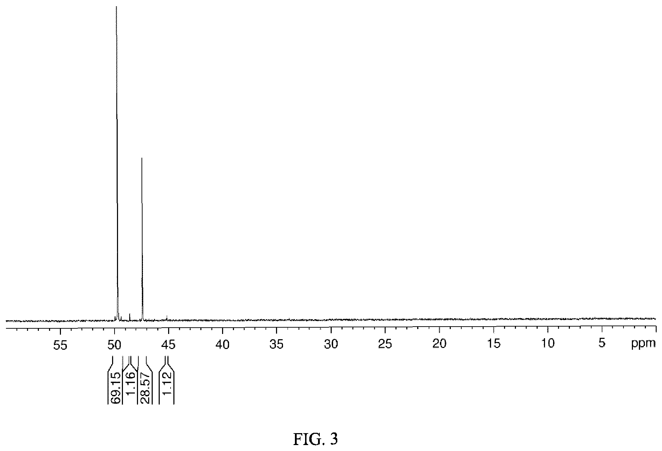

The hybrid salt obtained in the example was subjected to alkaline hydrolysis. Its ³¹P-nuclear magnetic resonance (NMR) spectrum is shown in FIG. 3. Peak areas of three peaks correspond to molar concentrations of three kinds of hypophosphites respectively. Therefore, the values of x, y, and z can be conveniently calculated by a ratio of the peak areas.

### Example 4a Preparation of hybrid salt having structure of Formula (I), where x=0.60, y=0.38, z=0.02, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 3.0% was injected at a constant rate of 10 ml/h. The isobutylene was continuously introduced into the reaction kettle. The introduced amount of olefin was measured by a gas flow meter. After 2.0 hours, the flow of isobutylene was stopped. Ethylene was started to be introduced. The pressure was increased to 0.8 MPa. After 15.5 hours, the flow of ethylene was stopped. An initiator was continuously injected. After half an hour, the pressure of the reaction kettle did not drop anymore, indicating that the reaction was complete. A colorless transparent reaction solution was obtained by cooling and releasing pressure, N₂ purging and discharging.

Samples were taken during the reaction, and nuclear magnetic resonance was performed. ³¹P-NMR results are shown in Table 8.

**Table 8**

| Time | Double-addition product | | | Mono-addition product | | | Raw material | Raw material oxidation |
|---|---|---|---|---|---|---|---|---|
| | Diethyl | Ethyl isobutyl | Diisobutyl | Monoethyl | Monoisobutyl | Monoxide | | |
| 7.5 h | 50.03 % | 32.86 % | 1.30% | 6.87% | 4.42% | 0 | 4.22 % | 0.30 % |
| 15. 5 h | 60.06 % | 37.83 % | 1.65% | 0 | 0 | 0.24% | 0 | 0.22 % |

847 g of the above solution was slowly added into an aqueous solution containing 104.79 g of aluminum sulfate octadecahydrate with a mass concentration of 20%. A reaction temperature was controlled to 70°C, and a pH value was adjusted to be less than or equal to 3.0. A large amount of precipitation was obtained. After 1 hour, addition was complete. Filtering was performed while hot. A filter cake was washed with water to pH>4.5. The filter cake was dried at 120°C to obtain 126.1 g product with a yield of 94.9%.

A sample was dissolved in a sodium hydroxide aqueous solution. The ³¹P-NMR results gave 60.29% of diethylphosphinate, 38.24% of ethylisobutylphosphinate, and 1.47% of diisobutylphosphinate, that is, x=0.60, y=0.38, and z=0.02.

An XRD measurement was performed on the sample. Interplanar spacings corresponding to characteristic peaks with a highest relative intensity and a second highest relative intensity determined by XRD were 10.455 Å (100%) and 4.436 Å (14.2%) respectively. The results are shown in Table 9.

**Table 9**

| Characteristic peak number | Interplanar spacing (Å) | Relative intensity (%) |
|---|---|---|
| 1 | 10.455 | 100% |
| 2 | 4.436 | 14.2% |
| 3 | 3.804 | 2.7% |

### Example 4b Preparation of hybrid salt having structure of Formula (I), where x=0.63, y=0.36, z=0.01, M=Fe, n=3

According to Example 4a, 49.46 g of a reaction solution was slowly added into a 15% aqueous solution containing 5.41 g of ferric chloride hexahydrate. A reaction temperature was controlled to 70°C, and a pH value was adjusted to be less than or equal to 2.0. A large amount of precipitation was obtained. After 1 hour, addition was complete. Filtering was performed while hot. A filter cake was washed with water to pH>4.0. The filter cake was dried at 120°C to obtain 8.40 g product with a yield of 93.7%.

A sample was dissolved in a sodium hydroxide aqueous solution. ³¹P-NMR results gave 63.26% of diethylphosphinate, 35.82% of ethylisobutylphosphinate, and 0.92% of diisobutylphosphinate, that is, x=0.63, y=0.36, and z=0.01.

An XRD measurement was performed on the sample. Interplanar spacings corresponding to characteristic peaks with a highest relative intensity and a second highest relative intensity determined by XRD were 10.407 Å (100%) and 4.502 Å (8.0%) respectively. The results are shown in Table 10.

**Table 10**

| Characteristic peak number | Interplanar spacing (Å) | Relative intensity (%) |
|---|---|---|
| 1 | 10.407 | 100% |
| 2 | 4.502 | 8.0% |
| 3 | 3.824 | 6.1% |

### Example 4c Preparation of hybrid salt having structure of Formula (I), where x=0.62, y=0.37, z=0.01, M=Zn, n=2

According to Example 4a, 197.85 g of a reaction solution was slowly added to a 15% aqueous solution containing 34.51 g of zinc sulfate heptahydrate. A reaction temperature was controlled to 70°C. After addition was completed, cooling and drying was performed to obtain white solid. A sample was dissolved in a sodium hydroxide aqueous solution. ³¹P-NMR results gave 62.0% of diethylphosphinate, 36.7% of ethylisobutylphosphinate, and 1.3% of diisobutylphosphinate, that is, x=0.62, y=0.37, and z=0.01.

An XRD measurement was performed on the sample. Interplanar spacings corresponding to characteristic peaks with a highest relative intensity and a second highest relative intensity determined by XRD were 8.741 Å (100%) and 9.044 Å (57.6%) respectively. The results are shown in Table 11.

**Table 11**

| Characteristic peak number | Interplanar spacing (Å) | Relative intensity (%) |
|---|---|---|
| 1 | 16.978 | 15.9% |
| 2 | 14.750 | 4.6% |
| 3 | 9.044 | 57.6% |
| 4 | 8.741 | 100% |
| 5 | 7.966 | 12.8% |
| 6 | 4.792 | 9.1% |

### Example 5a Preparation of hybrid salt having structure of Formula (I), where x=0.45, y=0.52, z=0.03, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90°C and a pressure gauge showed 0.3 MPa. Then a sodium persulfate aqueous solution with a mass concentration of 3.0% was injected at a constant rate of 10 ml/h. The isobutylene was continuously introduced into the reaction kettle. After 5.5 hours, the flow of isobutylene was stopped. Ethylene was started to be introduced. The pressure was increased to 0.8 MPa. After 17 hours, the reaction was complete, and the flow of ethylene was stopped. A colorless transparent reaction solution was obtained by cooling and releasing pressure, N₂ purging and discharging.

Samples were taken during the reaction, and nuclear magnetic resonance was performed. ³¹P-NMR results are shown in Table 12.

**Table 12**

| Time | Double-addition product | | | | Mono-addition product | | | Hypophosphite | Phosphite |
|---|---|---|---|---|---|---|---|---|---|
| | Diethyl | Lo ng-chain alkyl * | Ethyl isobutyl | Diisobutyl | Monoethyl | Monoisobutyl | Monoxide | | |
| 5.5h | 0 | 0 | 0 | 0.95% | 0 | 41.46% | 0 | 55.90% | 1.70% |
| 14 h | 43.23% | 1.05% | 46.83% | 2.93% | 0.66% | 1.62% | 0.67% | 1.57% | 1.45% |
| 17 h | 45.95% | 1.33% | 47.71% | 2.80% | 0 | 0 | 0.97% | 0 | 1.24% |

| | | | | | | | | | |
|---|---|---|---|---|---|---|---|---|---|
| * Long-chain alkyl includes ethyl n-butylphosphinate and butylbutylphosphinate. | | | | | | | | | |

445 g of the above solution was slowly added into a 10% aqueous solution containing 59.98 g of aluminum sulfate octadecahydrate. A reaction temperature was controlled to 70°C, and a pH value was adjusted to be less than or equal to 2.9. A large amount of precipitation was obtained. After 1 hour, addition was complete. Filtering was performed while hot. A filter cake was washed with water to pH>4.5. The filter cake was dried at 120°C to obtain 69.3 g product with a yield of 89%.

A sample was dissolved in a sodium hydroxide aqueous solution. The ³¹P-NMR results gave 44.18% of diethylphosphinate, 50.45% of ethylisobutylphosphinate, 3.24% of diisobutylphosphinate, and the balance was long-chain alkylphosphonate and alkylphosphonate impurities. After normalization, x=0.45, y=0.52, and z=0.03.

An XRD measurement was performed on the sample. Interplanar spacings corresponding to characteristic peaks with a highest relative intensity and a second highest relative intensity determined by XRD were 10.626 Å (100%) and 4.436 Å (12.7%) respectively. The results are shown in Table 13.

**Table 13**

| Characteristic peak number | Interplanar spacing (Å) | Relative intensity (%) |
|---|---|---|
| 1 | 10.626 | 100% |
| 2 | 4.436 | 12.7% |
| 3 | 3.817 | 2.2% |

### Example 5b Preparation of hybrid salt having structure of Formula (I), where x=0.48, y=0.49, z=0.03, M=Fe, n=3

According to Example 5a, 51.3 g of a reaction solution was slowly added into a 15% aqueous solution containing 5.41 g of ferric chloride hexahydrate. A reaction temperature was controlled to 70°C, and a pH value was adjusted to be less than or equal to 2.0. A large amount of precipitation was obtained. After 1 hour, addition was complete. Filtering was performed while hot. A filter cake was washed with water to pH>4.0. The filter cake was dried at 120°C to obtain 8.70 g product with a yield of 94.7%.

A sample was dissolved in a sodium hydroxide aqueous solution. ³¹P-NMR results gave 47.22% of diethylphosphinate, 48.25% of ethylisobutylphosphinate, 2.13% of diisobutylphosphinate, and the balance was long-chain alkylphosphonate and alkylphosphonate impurities. After normalization, x=0.48, y=0.49, and z=0.03.

An XRD measurement was performed on the sample. Interplanar spacings corresponding to characteristic peaks with a highest relative intensity and a second highest relative intensity determined by XRD were 10.603 Å (100%) and 4.524 Å (11.2%) respectively. The results are shown in Table 14.

**Table 14**

| Characteristic peak number | Interplanar spacing (Å) | Relative intensity (%) |
|---|---|---|
| 1 | 10.603 | 100% |
| 2 | 4.524 | 11.2% |
| 3 | 3.863 | 5.95% |

### Example 6 Preparation of hybrid salt having structure of Formula (I), where x=0.31, y=0.64, z=0.05, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90°C and a pressure gauge showed 0.3 MPa. Then a 4.0% 2,2'-azobis (2-amidinopropane) dichloride aqueous solution was injected at a constant rate of 10 ml/h. The isobutylene was continuously introduced into the reaction kettle. After 9.5 hours, the flow of isobutylene was stopped. Ethylene was started to be introduced. The pressure was increased to 0.8 MPa. After 20 hours, the reaction was complete, and the flow of ethylene was stopped. A colorless transparent reaction solution was obtained by cooling and releasing pressure, N₂ purging and discharging.

Samples were taken during the reaction, and nuclear magnetic resonance was performed. ³¹P-NMR results are shown in Table 15.

**Table 15**

| Time | Double-addition product | | | Mono-addition product | | | Raw material | Raw material oxidation |
|---|---|---|---|---|---|---|---|---|
| | Diethyl | Ethylisobutyl | Diisobutyl | Monoethyl | Monoisobutyl | Monoxide | | |
| 16.5 h | 27.71 % | 57.6 % | 5.45% | 1.63% | 4.13% | 0.94% | 0.80 % | 1.74 % |
| 20 h | 30.49 % | 61.35 % | 5.70% | 0 | 0 | 1.21% | 0 | 1.25 % |

512 g of the above solution was slowly added into a 10% aqueous solution containing 59.98 g of aluminum sulfate octadecahydrate. A reaction temperature was controlled to 70°C, and a pH value was adjusted to be less than or equal to 2.9. A large amount of precipitation was obtained. After 1 hour, addition was complete. Filtering was performed while hot. A filter cake was washed with water to pH>4.5. The filter cake was dried at 120°C to obtain 74.46 g product with a yield of 93.7%.

A sample was dissolved in a sodium hydroxide aqueous solution. The ³¹P-NMR results gave 30.76% of diethylphosphinate, 63.27% of ethylisobutylphosphinate, 4.60% of diisobutylphosphinate, and the balance was long-chain alkylphosphonate and alkylphosphonate impurities. After normalization, x=0.31, y=0.64, and z=0.05.

An XRD measurement was performed on the sample. Interplanar spacings corresponding to characteristic peaks with a highest relative intensity and a second highest relative intensity determined by XRD were 10.965 Å (100%) and 4.463 Å (9.9%) respectively. The results are shown in Table 16.

**Table 16**

| Characteristic peak number | Interplanar spacing (Å) | Relative intensity (%) |
|---|---|---|
| 1 | 10.965 | 100% |
| 2 | 6.336 | 1.4% |
| 3 | 4.463 | 9.9% |
| 4 | 3.861 | 1.8% |

### Example 7 Preparation of hybrid salt having structure of Formula (I), where x=0.28, y=0.68, z=0.04, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 3.0% was injected at a constant rate of 10 ml/h. The isobutylene was continuously introduced into the reaction kettle. After 10.5 hours, the flow of isobutylene was stopped. Ethylene was started to be introduced. The pressure was increased to 0.8 MPa. After 21 hours, the reaction was basically complete, and the flow of ethylene was stopped. A colorless transparent reaction solution was obtained by cooling and releasing pressure, N₂ purging and discharging.

Samples were taken during the reaction, and nuclear magnetic resonance was performed. ³¹P-NMR results are shown in Table 17.

**Table 17**

| Ti me | Double-addition product | | | Mono-addition product | | | Raw material | Raw material oxidation |
|---|---|---|---|---|---|---|---|---|
| | Dieth yl | Ethyl isobutyl | Diisobu tyl | Monoet hyl | Monoisob utyl | Monox ide | | |
| 21 h | 28.56 % | 64.22 % | 4.64% | 0.56% | 0.82% | 0.34% | 0.18 % | 0.68 % |

A mono-addition product in the above solution was oxidized with sufficient 30% hydrogen peroxide, then the solution was slowly added into a 10% aqueous solution containing 104.79 g of aluminum sulfate octadecahydrate. A reaction temperature was controlled to 70°C, and a pH value was adjusted to be less than or equal to 2.9. A large amount of precipitation was obtained. After 1 hour, addition was complete. Filtering was performed while hot. A filter cake was washed with water to pH>4.5. The filter cake was dried at 120°C to obtain 124.99 g product with a yield of 91.7%.

A sample was dissolved in a sodium hydroxide aqueous solution. The ³¹P-NMR results gave 27.78% of diethylphosphinate, 66.83% of ethylisobutylphosphinate, 4.00% of diisobutylphosphinate, and the balance was other phosphorus impurities. After normalization, x=0.28, y=0.68, and z=0.04.

An XRD measurement was performed on the sample. Interplanar spacings corresponding to characteristic peaks with a highest relative intensity and a second highest relative intensity determined by XRD were 10.913 Å (100%) and 4.461 Å (12.6%) respectively. The results are shown in Table 18.

**Table 18**

| Characteristic peak number | Interplanar spacing (Å) | Relative intensity (%) |
|---|---|---|
| 1 | 10.913 | 100% |
| 2 | 6.325 | 1.3% |
| 3 | 4.461 | 12.6% |
| 4 | 3.854 | 2.3% |

### Example 8 Preparation of hybrid salt having structure of Formula (I), where x=0.03, y=0.58, z=0.39, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 3.0% was injected at a constant rate of 10 ml/h. The isobutylene was continuously introduced into the reaction kettle. After 13 hours, the flow of isobutylene was stopped. Ethylene was started to be introduced. The pressure was increased to 0.8 MPa. After 25 hours, the flow of ethylene was stopped. A colorless transparent reaction solution was obtained by cooling and releasing pressure, N₂ purging and discharging.

A mono-addition product in the above solution was oxidized with sufficient 30% hydrogen peroxide, then 500 g of the solution was slowly added into a 10% aqueous solution containing 13.33 g of aluminum sulfate octadecahydrate. A reaction temperature was controlled to 70°C, and a pH value was adjusted to be less than or equal to 2.9. A large amount of precipitation was obtained. After 1 hour, addition was complete. Filtering was performed while hot. A filter cake was washed with water to pH>4.5. The filter cake was dried at 120°C to obtain 19.05 g product with a yield of 94%.

A sample was dissolved in a sodium hydroxide aqueous solution. ³¹P-NMR results gave 2.69% of diethylphosphinate, 52.89% of ethylisobutylphosphinate, and 35.84% of diisobutylphosphinate. After normalization, x=0.03, y=0.58, and z=0.39.

An XRD measurement was performed on the sample. Interplanar spacings corresponding to characteristic peaks with a highest relative intensity and a second highest relative intensity determined by XRD were 11.619 Å (100%) and 4.492 Å (11.7%) respectively. The results are shown in Table 19.

**Table 19**

| Characteristic peak number | Interplanar spacing (Å) | Relative intensity (%) |
|---|---|---|
| 1 | 11.619 | 100% |
| 2 | 6.83 | 1.5% |
| 3 | 4.492 | 11.7% |
| 4 | 4.365 | 2.0% |
| 5 | 3.928 | 1.8% |

### Example 9 Preparation of hybrid salt having structure of Formula (I), where x=0.03, y=0.52, z=0.45, M=Al, n=3

100 g of sodium hypophosphite monohydrate was dissolved in 500 g of water, and was put into a 1L stainless steel pressure reaction kettle. The reaction kettle was purged by nitrogen twice, vacuumized, and subsequently filled with isobutylene until pressure no longer rose. A reaction solution was heated to about 90 °C and a pressure gauge showed 0.3 MPa. Then a sodium persulfate aqueous solution with a mass concentration of 3.0% was injected at a constant rate of 10 ml/h. The isobutylene was continuously introduced into the reaction kettle. After 15 hours, the flow of isobutylene was stopped. Ethylene was started to be introduced. The pressure was increased to 0.8 MPa. After 27 hours, the reaction was complete, and the flow of ethylene was stopped. A colorless transparent reaction solution was obtained by cooling and releasing pressure, N₂ purging and discharging.

Samples were taken during the reaction, and nuclear magnetic resonance was performed. ³¹P-NMR results are shown in Table 20.

**Table 20**

| Ti me | Double-addition product | | | Mono-addition product | | | Raw material | Raw material oxidation |
|---|---|---|---|---|---|---|---|---|
| | Diet h yl | Ethyl isobutyl | Diisobu tyl | Monoet hyl | Monoisob utyl | Monoxi de | | |
| 21 h | 0.87 % | 41.13 % | 43.87% | 0.73% | 11.82% | 0.46% | 0.43 % | 0.69 % |
| 24 h | 1.53 % | 46.58 % | 44.44% | 1.12% | 4.69% | 0.49% | 0.35 % | 0.80 % |
| 27 h | 2.81 % | 50.94 % | 43.54% | 0.23% | 1.24% | 0.49% | 0 | 0.75 % |

280 g of the above solution was slowly added into a 10% aqueous solution containing 7.46 g of aluminum sulfate octadecahydrate. A reaction temperature was controlled to 70 °C, and a pH value was adjusted to be less than or equal to 2.9. A large amount of precipitation was obtained. After 1 hour, addition was complete. Filtering was performed while hot. A filter cake was washed with water to pH>4.5. The filter cake was dried at 120°C to obtain 10.7 g product with a yield of 94.3%.

A sample was dissolved in a sodium hydroxide aqueous solution. The ³¹P-NMR results gave 2.9% of diethylphosphinate, 51.0% of ethylisobutylphosphinate, and 43.5% of diisobutylphosphinate. After normalization, x=0.03, y=0.52, and z=0.45.

An XRD measurement was performed on the dried sample. X-ray diffraction (XRD) results obtained are shown in Table 21 below. From a characteristic peak with a highest relative intensity in Table 21, it can be seen that an interplanar spacing is mainly 11.666 Å. The results are shown in Table 21.

**Table 21**

| Characteristic peak number | Interplanar spacing (Å) | Relative intensity (%) |
|---|---|---|
| 1 | 11.666 | 100.0% |
| 2 | 6.751 | 1.2% |
| 3 | 4.506 | 10.3% |
| 4 | 3.946 | 1.7% |

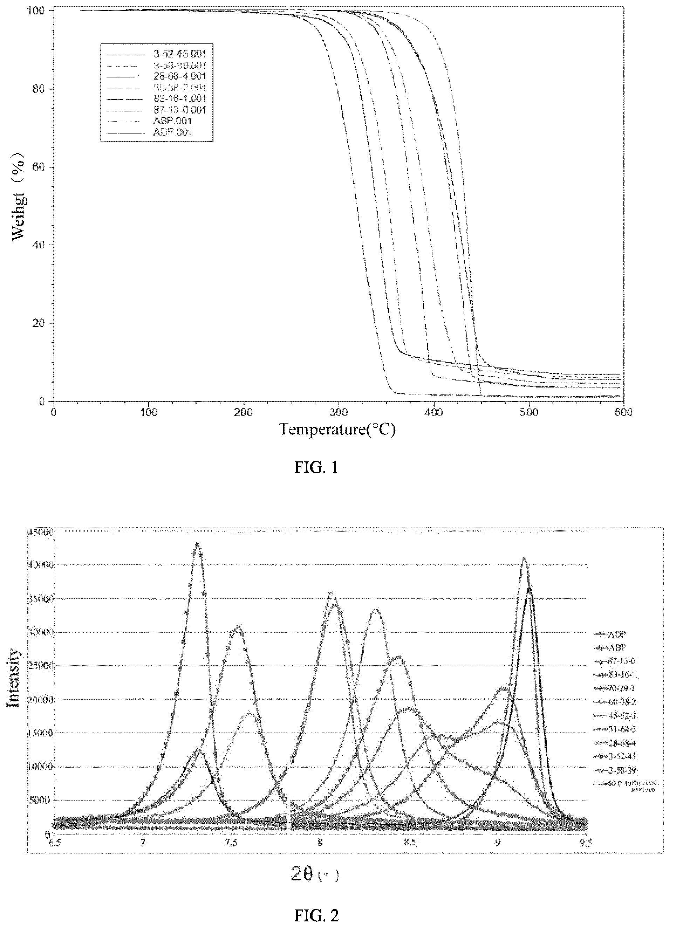

The hybrid dialkylphosphinic acid salt obtained in Examples 1, 2a, 4a, 7, 8 and 9 was subjected to thermogravimetric analysis (TGA) tests. Results are shown in FIG. 1. FIG. 1 shows TGA curves of the hybrid salts with different values of x, y and z, aluminum diethylphosphinate (ADP) and aluminum diisobutylphosphinate (ABP). It can be seen from the graph that the aluminum diisobutylphosphinate has the lowest thermal stability. The greater a value of z is, the lower thermal stability the hybrid salt has.

### Example 10 (comparative example) Iron diethylphosphinate

93.82 g of 18.4 wt% sodium diethylphosphinate aqueous solution (2.1 mol% of sodium ethylbutylphosphinate and 0.5 mol% of sodium ethylphosphonate) was slowly added to an aqueous solution at a mass concentration of 15% containing 10.81 g ferric chloride hexahydrate. A reaction temperature was maintained at 70 °C, and pH=2. Addition was completed for half an hour, and the temperature was maintained for half an hour. Filtering was performed while hot. A filter cake was washed with water to pH>4. The filter cake was dried at 120°C to obtain 15.5 g product with a yield of 92.5%.

An XRD measurement was performed on a sample. Results are shown in Table 22.

**Table 22**

| Characteristic peak number | Interplanar spacing (Å) | Relative intensity (%) |
|---|---|---|
| 1 | 9.624 | 100% |
| 2 | 5.549 | 2.3% |
| 3 | 4.761 | 14.2% |
| 4 | 4.637 | 2.9% |
| 5 | 3.558 | 3.6% |
| 6 | 3.383 | 7.0% |
| 7 | 3.339 | 6.9% |

### Example 11

Polyamide PA66, the hybrid salt prepared in Example 1, and a composite antioxidant were mixed in an internal mixer at 50 rpm/min in a weight ratio of 79.6: 20: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.**Example 12**

Polyamide PA6, the hybrid salt prepared in Example 1, and a composite antioxidant were mixed in an internal mixer at 50 rpm/min in a weight ratio of 79.6: 20: 0.4 at 260 °C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.

### Example 13

Polyester PBT, the hybrid salt prepared in Example 1, and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL94 V-0 at 1.6 mm thickness.

### Example 14-40

The flame retardants of Examples 2-9 were prepared and tested in polyamide PA66, PA6, PPA, and PBT separately in manners described in Examples 11-13. Results are shown in Tables 23 and 24.

### Example 41

Polyamide PA66, the hybrid salt prepared in Example 8, MPP and a composite antioxidant were mixed in an internal mixer at 50 rpm/min in a weight ratio of 82.6: 12: 5: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-0 at 1.6 mm thickness.

### Comparative example 1

Polyamide PA66, the iron diethylphosphinate prepared in Example 10, and a composite antioxidant were mixed in an internal mixer at 50 rpm/min in a weight ratio of 79.6: 20: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 2

Polyamide PA66, ADP, and a composite antioxidant were mixed in an internal mixer at 50 rpm/min in a weight ratio of 79.6: 20: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 3

Polyamide PA6, ADP, and a composite antioxidant were mixed in an internal mixer at 50 rpm/min in a weight ratio of 79.6: 20: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 no grade at 1.6 mm thickness.

### Comparative example 4

Polyester PBT, ADP, and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL94 V-2 at 1.6 mm thickness.

### Comparative example 5

Polyester PBT, aluminum diisobutylphosphinate (ABP), and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL94 V-2 at 1.6 mm thickness.

### Comparative example 6

Polyamide PA66, aluminum diisobutylphosphinate (ABP), and a composite antioxidant were mixed in an internal mixer at 50 rpm/min in a weight ratio of 87.1: 12.5: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.

Comparative example results are shown in Table 25.

**Table 23 Formulations and test results of Examples 11-26**

| | Example 11 | Example 12 | Example 13 | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|---|---|
| PA66 | 79.6 | | | 79.6 | | | 79.6 | | 79.6 | 87.1 | | | | 79.6 | 79.6 | 87.1 |
| PA6 | | 79.6 | | | 79.6 | 79.6 | | 79.6 | | | 79.6 | 84.6 | | | | |
| PBT | | | 84.6 | | | | | | | | | | 84.6 | | | |
| PPA | | | | | | | | | | | | | | | | |
| Flame retardant preparation | Example 1 | Example 1 | Example 1 | Example 2a | Example 2a | Example 2b | Example 3 | Example 3 | Example 4a | Example 4a | Example 4a | Example 4a | Example 4a | Example 4b | Example 4c | Example 5a |
| Formula (I) | 0.87/0.13/ 0/Al | 0.87/0.13/ 0/Al | 0.87/0.13/ 0/Al | 0.83/0.16/ 0.01/Al | 0.83/0.16/ 0.01/Al | 0.83/0.16/ 0.01/Cu | 0.70/0.29/ 0.01 /Al | 0.70/0.29/ 0.01/Al | 0.60/0.38/ 0.02/Al | 0.60/0.38/ 0.02/Al | 0.60/0.38/ 0.02/Al | 0.60/0.38/ 0.02/Al | 0.60/0.38/ 0.02/Al | 0.63/0.36/ 0.01/Fe | 0.62/0.37/ 0.01/Zn | 0.45/0.52/ 0.03/Al |
| Flame retardant Part | 20 | 20 | 15 | 20 | 20 | 20 | 20 | 20 | 20 | 12.5 | 20 | 15 | 15 | 20 | 20 | 12.5 |
| Compound antioxidant | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| UL-94 | V-1 | V-1 | V-0 | V-0 | V-0 | V-0 | V-0 | V-0 | V-0 | V-0 | V-0 | V-0 | V-0 | V-0 | V-0 | V-0 |

**Table 24 Formulations and test results of Examples 27-41**

| | Example 27 | Example 28 | Example 29 | Example 30 | Example 31 | Example 32 | Example 33 | Example 34 | Example 35 | Example 36 | Example 37 | Example 38 | Example 39 | Example 40 | Example 41 |
|---|---|---|---|---|---|---|---|---|---|---|---|---|---|---|---|
| PA66 | | 79.6 | 79.6 | 79.6 | 84.6 | 87.1 | 79.6 | 84.6 | | 79.6 | 87.1 | | | | 82.6 |
| PA6 | 87.1 | | | | | | | | 84.6 | | | 79.6 | | | |
| PBT | | | | | | | | | | | | | | | |
| PPA | | | | | | | | | | | | | 84.6 | 84.6 | |
| Flame retardant preparati on | Example 5a | Example 5b | Example 6 | Example 7 | Example 7 | Example 7 | Example 8 | Example 8 | Example 8 | Example 9 | Example 9 | Example 9 | Example 2a | Example 4a | Example 8 |
| Formula (I) | 0.45/0.5 2/ 0.03/Al | 0.48/0.4 9/ 0.03/Fe | 0.31/0.6 4/ 0.05/Al | 0.28/0.6 8/ 0.04/Al | 0.28/0.6 8/ 0.04/Al | 0.28/0.6 8/ 0.04/Al | 0.03/0.5 8/ 0.39/Al | 0.03/0.5 8/ 0.39/Al | 0.03/0.5 8/ 0.39/Al | 0.03/0.5 2/ 0.45/Al | 0.03/0.5 2/ 0.45/Al | 0.03/0.5 2/ 0.45/Al | 0.83/0.1 6/ 0.01/Al | 0.60/0.3 8/ 0.02/Al | 0.03/0.5 8/ 0.39/Al |
| Flame retardant Part | 12.5 | 20 | 20 | 20 | 15 | 12.5 | 20 | 15 | 15 | 20 | 12.5 | 20 | 15 | 15 | 12 |
| MPP | | | | | | | | | | | | | | | 5 |
| Compoun d antioxida nt | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| UL-94 | V-0 | V-0 | V-0 | V-0 | V-0 | V-0 | V-0 | V-0 | V-0 | V-0 | V-0 | V-0 | V-0 | V-0 | v-o |

**Table 25 Formulations and test results of Comparative examples 1-6**

| | Comparative example 1 | Comparative example 2 | Comparative example 3 | Comparative example 4 | Comparative example 5 | Comparative example 6 |
|---|---|---|---|---|---|---|
| PA66 | 79.6 | 79.6 | | | | 87.1 |
| PA6 | | | 79.6 | | | |
| PBT | | | | 84.6 | 84.6 | |
| Flame retardant preparation | Example 10 | | | | | |
| Formula (I) | 1.00/0/0/Fe | | | | | |
| Flame retardant part | 20 | | | | | |
| ADP | | 20 | 20 | 15 | | |
| ABP | | | | | 15 | 12.5 |
| Compound antioxidant | 0.4 | 0.4 | 0.4 | 0.4 | 0.4 | 0.4 |
| UL-94 | NG | NG | NG | V-2 | V-2 | V-1 |

| | | | | | | |
|---|---|---|---|---|---|---|
| *: NG No grade | | | | | | |

Examples 11-41 illustrate that a flame retardant containing the hybrid dialkylphosphinic acid salt of the present disclosure has outstanding flame retardant efficiency for both polyamide and polyester. Comparative example 1 illustrates that pure iron diethylphosphinate has low flame retardant efficiency for polyamide and polyester. Comparative examples 2-4 illustrate that pure aluminum diethylphosphinate has low flame retardant efficiency for polyamide and polyester. Comparative example 5 illustrates that pure aluminum diisobutylphosphinate has low flame retardant efficiency for polyester. Comparative example 6 illustrates that pure aluminum diisobutylphosphinate has lower flame retardancy for polyamide than a hybrid salt containing ethylisobutylphosphinate at the same loading level as shown in Examples 20, 26, 32 and 37. Moreover, it is found in the examples that the more the content of the hybrid salt containing diisobutylphosphinate is, the darker the color of a flame retardant sample is, indicating more degradation. A flame retardant polymer sample made from pure aluminum diisobutylphosphinate has the darkest color.

## Claims

1. A hybrid dialkylphosphinic acid salt, selected from at least one of compounds represented by Formula (I): 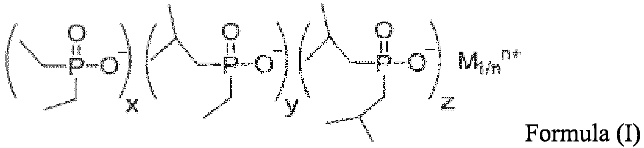
wherein M is a central atom, and a diethylphosphinate ion, an ethylisobutylphosphinate ion and a diisobutylphosphinate ion are ligands;
the M is selected from metal elements; the metal element is selected from at least one of group IIA, IIIA, IVA and VA metal elements, a transition metal element and a lanthanide metal element;
n is a valence state of the metal M; n is selected from 2, 3 or 4;
0≤x≤0.95; 0.05≤y≤0.8; and 0≤z≤0.5, x+y+z=1, and x+z>0.

2. The hybrid dialkylphosphinic acid salt according to claim 1, wherein the group IIA metal element is selected from at least one of Be, Mg, Ca, Sr and Ba;
the group IIIA metal element is Al;
the group IVA metal element is Sn;
the group VA metal element is Sb;
the transition metal element is selected from at least one of Fe, Zn, Cu, Ti, Zr and Mn; and the lanthanide metal element is Ce.

3. The hybrid dialkylphosphinic acid salt according to claim 1, wherein 0.03≤x≤0.87, 0.13≤y≤0.68, and 0≤z≤0.45.

4. The hybrid dialkylphosphinic acid salt according to claim 3, wherein 0.03≤x≤0.7, 0.29≤y≤0.68, and 0.01≤z≤0.45.

5. A preparation method of the hybrid dialkylphosphinic acid salt according to any one of claims 1-4, comprising:
causing reaction I on a material comprising a mixture A and a metal element M source in an aqueous phase, and obtaining the hybrid dialkylphosphinic acid salt; wherein
the mixture A comprises diethylphosphinic acid and/or an alkali metal salt of the diethylphosphinic acid, ethylisobutylphosphinic acid and/or an alkali metal salt of the ethylisobutylphosphinic acid, and diisobutylphosphinic acid and/or an alkali metal salt of the diisobutylphosphinic acid.

6. The preparation method according to claim 5, wherein the reaction I is carried out at conditions of temperature of 0°C-250°C, pressure of 0.1 MPa-10 MPa, and time of 0.1 h-20 h.

7. The preparation method according to claim 5, wherein obtaining of the mixture A comprises:
introducing ethylene and isobutylene into an aqueous solution comprising phosphinic acid and/or an alkali metal salt of the phosphinic acid, and a radical initiator for reaction II, and obtaining the mixture A.

8. The preparation method according to claim 7, wherein mass of water in the aqueous solution is 10%-99% of total mass of the radical initiator and the phosphinic acid and/or the alkali metal salt of the phosphinic acid.

9. The preparation method according to claim 7, wherein the reaction II has conditions of temperature of 0°C-250°C, time of 0.01 h-50 h, and pressure of 0 MPa-3 MPa.

10. The preparation method according to claim 7, wherein a molar ratio of the radical initiator to the total amount of the phosphinic acid and/or the alkali metal salt of the phosphinic acid is 0.001-0.1: 1.

11. The preparation method according to claim 7, wherein obtaining of the mixture A comprises:
introducing the isobutylene into an aqueous solution comprising phosphinic acid and/or an alkali metal salt of the phosphinic acid and a radical initiator for reaction, after a molar ratio of the introduced isobutylene to total phosphorus of the phosphinic acid and/or the alkali metal salt of the phosphinic acid reaches (y+2z)/1 in Formula (I), stopping introducing the isobutylene, then introducing ethylene for reaction, and obtaining the mixture A.

12. The preparation method according to claim 7, wherein obtaining of the mixture A comprises:
introducing the isobutylene and portion of the ethylene into an aqueous solution comprising phosphinic acid and/or an alkali metal salt of the phosphinic acid and a radical initiator for reaction, wherein a molar ratio of the ethylene to total phosphorus of the phosphinic acid and/or the alkali metal salt of the phosphinic acid is less than (2x+y)/1 in Formula (I), after a molar ratio of the introduced isobutylene to the total phosphorus of the phosphinic acid and/or the alkali metal salt of the phosphinic acid reaches (y+2z)/1 in Formula (I), stopping introducing the isobutylene, then introducing the remaining ethylene for reaction, and obtaining the mixture A.

13. The preparation method according to claim 7, wherein obtaining of the mixture A comprises:
introducing portion of the ethylene into an aqueous solution comprising phosphinic acid and/or an alkali metal salt of the phosphinic acid and a radical initiator, wherein a molar ratio of the ethylene to total phosphorus of the phosphinic acid and/or the alkali metal salt of the phosphinic acid is less than (2x+y)/1 in Formula (I), after the ethylene completely reacts, introducing the isobutylene for reaction, after a molar ratio of the introduced isobutylene to the total phosphorus of the phosphinic acid and/or the alkali metal salt of the phosphinic acid reaches (y+2z)/1 in Formula (I), stopping introducing the isobutylene, then introducing the remaining ethylene for reaction, and obtaining the mixture A.

14. The preparation method according to claim 5, wherein a metal element M source is selected from at least one of metal element M salts.

15. A flame retardant, selected from the hybrid dialkylphosphinic acid salt according to any one of claims 1-4.

16. A flame retardant material, comprising a flame retardant P and a thermoplastic polymer, wherein
the flame retardant P is selected from at least one of the flame retardants according to claim 15.

17. The flame retardant material according to claim 16, wherein a weight percent of the flame retardant P in the flame retardant material is 1%-35%.

18. The flame retardant material according to claim 16, further comprising a functional additive, wherein
the functional additive is selected from at least one of a reinforcing agent, an anti-dripping agent, a stabilizer, a pigment, a dye, a charring catalyst, a dispersant, a nucleating agent, an inorganic filler and an antioxidant.

19. The flame retardant material according to claim 18, wherein a weight percent of the functional additive in the flame retardant material is 5%-40%.

20. The flame retardant material according to claim 18, further comprising a flame retardant Q, wherein
the flame retardant Q is selected from at least one of a nitrogen flame retardant and a boron flame retardant.

21. The flame retardant material according to claim 20, wherein a weight percent of the flame retardant Q in the flame retardant material is 0.5%-20%.

22. The flame retardant material according to claim 16, wherein the thermoplastic polymer is selected from at least one of polyamide and polyester.

## Patentansprüche

1. Hybrides Dialkylphosphinsäuresalz, ausgewählt aus mindestens einer der durch die Formel (I) repräsentierten Verbindungen: 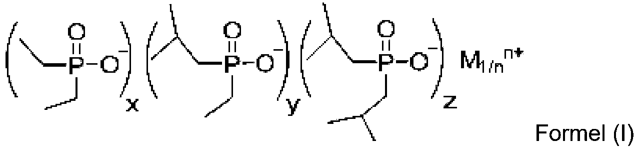
wobei M ein Zentralatom ist, und ein Diethylphosphinat-Ion, ein Ethylisobutylphosphinat-Ion und ein Diisobutylphosphinat-lon Liganden sind;
M ist ausgewählt aus Metallelementen; das Metallelement ist ausgewählt aus mindestens einem der Metallelemente der Gruppen IIA, IIIA, IVA und VA, einem Übergangsmetallelement und einem Lanthaniden-Metallelement;
n ist ein Valenzzustand des Metalls M; n ist ausgewählt aus 2, 3 oder 4;
0 ≤ x ≤ 0,95; 0,05 ≤ y ≤ 0,8; und 0 ≤ z ≤ 0,5, x + y + z = 1 und x + z > 0.

2. Hybrides Dialkylphosphinsäuresalz nach Anspruch 1, wobei das Metall der Gruppe IIA aus mindestens einem der Elemente Be, Mg, Ca, Sr und Ba ausgewählt ist;
das Metall der Gruppe IIIA Al ist;
das Metall der Gruppe IVA Sn ist;
das Metall der Gruppe VA Sb ist;
das Übergangsmetall aus mindestens einem der Elemente Fe, Zn, Cu, Ti, Zr und Mn ausgewählt ist; und
das Lanthanid Ce ist.

3. Hybrides Dialkylphosphinsäuresalz nach Anspruch 1, wobei 0,03 ≤ x ≤ 0,87, 0,13 ≤ y ≤ 0,68 und 0 ≤ z ≤ 0,45.

4. Hybrides Dialkylphosphinsäuresalz nach Anspruch 3, wobei 0,03 ≤ x ≤ 0,7, 0,29 ≤ y ≤ 0,68 und 0,01 ≤ z ≤ 0,45.

5. Verfahren zur Herstellung des hybriden Dialkylphosphinsäuresalzes nach einem der Ansprüche 1 bis 4, umfassend:
Durchführung der Reaktion I an einem Material, das eine Mischung A und eine Quelle für das Metallelement M in einer wässrigen Phase umfasst, und Erhalten des hybriden Dialkylphosphinsäuresalzes; wobei
die Mischung A Diethylphosphinsäure und/oder ein Alkalimetallsalz der Diethylphosphinsäure, Ethylisobutylphosphinsäure und/oder ein Alkalimetallsalz der Ethylisobutylphosphinsäure sowie Diisobutylphosphinsäure und/oder ein Alkalimetallsalz der Diisobutylphosphinsäure umfasst.

6. Herstellungsverfahren nach Anspruch 5, wobei die Reaktion I unter den Bedingungen einer Temperatur von 0 °C bis 250 °C, eines Drucks von 0,1 MPa bis 10 MPa und einer Zeit von 0,1 h bis 20 h durchgeführt wird.

7. Herstellungsverfahren nach Anspruch 5, wobei das Erhalten der Mischung A umfasst:
Einleiten von Ethylen und Isobutylen in eine wässrige Lösung, die Phosphinsäure und/oder ein Alkalimetallsalz der Phosphinsäure sowie einen Radikalinitiator für die Reaktion II umfasst, und Erhalten der Mischung A.

8. Herstellungsverfahren nach Anspruch 7, wobei die Masse an Wasser in der wässrigen Lösung 10 % bis 99 % der Gesamtmasse des Radikalinitiators und der Phosphinsäure und/oder des Alkalimetallsalzes der Phosphinsäure beträgt.

9. Herstellungsverfahren nach Anspruch 7, wobei die Reaktion II die Bedingungen einer Temperatur von 0 °C bis 250 °C, einer Zeit von 0,01 h bis 50 h und eines Drucks von 0 MPa bis 3 MPa aufweist.

10. Herstellungsverfahren nach Anspruch 7, wobei das Molverhältnis des Radikalinitiators zur Gesamtmenge der Phosphinsäure und/oder des Alkalimetallsalzes der Phosphinsäure 0,001-0,1:1 beträgt.

11. Herstellungsverfahren nach Anspruch 7, wobei das Erhalten der Mischung A umfasst:
Einleiten des Isobutylens in eine wässrige Lösung, die Phosphinsäure und/oder ein Alkalimetallsalz der Phosphinsäure und einen Radikalinitiator für die Reaktion umfasst, und nachdem das Molverhältnis des eingeleiteten Isobutylens zum Gesamtphosphorgehalt der Phosphinsäure und/oder des Alkalimetallsalzes der Phosphinsäure den Wert (y+2z)/1 in Formel (I) erreicht hat, Beenden des Einleitens des Isobutylens, anschließend Einleiten von Ethylen zur Reaktion, und Erhalten der Mischung A.

12. Herstellungsverfahren nach Anspruch 7, wobei das Erhalten der Mischung A umfasst:
Einleiten des Isobutylens und eines Teils des Ethylens in eine wässrige Lösung, die Phosphinsäure und/oder ein Alkalimetallsalz der Phosphinsäure und einen Radikalinitiator für die Reaktion umfasst, wobei das Molverhältnis des Ethylens zum Gesamtphosphorgehalt der Phosphinsäure und/oder des Alkalimetallsalzes der Phosphinsäure kleiner ist als (2x+y)/1 in Formel (I), und nachdem das Molverhältnis des eingeleiteten Isobutylens zum Gesamtphosphorgehalt der Phosphinsäure und/oder des Alkalimetallsalzes der Phosphinsäure den Wert (y+2z)/1 in Formel (I) erreicht hat, Beenden des Einleitens des Isobutylens, anschließend Einleiten des verbleibenden Ethylens zur Reaktion, und Erhalten der Mischung A.

13. Herstellungsverfahren nach Anspruch 7, wobei das Erhalten der Mischung A umfasst:
Einleiten eines Teils des Ethylens in eine wässrige Lösung, die Phosphinsäure und/oder ein Alkalimetallsalz der Phosphinsäure und einen Radikalinitiator umfasst, wobei das Molverhältnis des Ethylens zum Gesamtphosphorgehalt der Phosphinsäure und/oder des Alkalimetallsalzes der Phosphinsäure kleiner ist als (2x+y)/1 in Formel (I), nach vollständiger Reaktion des Ethylens Einleiten des Isobutylens zur Reaktion, nachdem das Molverhältnis des eingeleiteten Isobutylens zum Gesamtphosphorgehalt der Phosphinsäure und/oder des Alkalimetallsalzes der Phosphinsäure (y+2z)/1 in Formel (I) erreicht hat, Beenden des Einleitens des Isobutylens, anschließend Einleiten des verbleibenden Ethylens zur Reaktion, und Erhalten der Mischung A.

14. Herstellungsverfahren nach Anspruch 5, wobei eine Quelle für das Metallelement M aus mindestens einem Salz des Metallelements M ausgewählt wird.

15. Flammschutzmittel, ausgewählt aus dem hybriden Dialkylphosphinsäuresalz nach einem der Ansprüche 1 bis 4.

16. Flammhemmendes Material, umfassend ein Flammschutzmittel P und ein thermoplastisches Polymer, wobei
das Flammschutzmittel P aus mindestens einem der Flammschutzmittel nach Anspruch 15 ausgewählt ist.

17. Flammhemmendes Material nach Anspruch 16, wobei der Gewichtsanteil des Flammschutzmittels P in dem flammhemmenden Material 1 % bis 35 % beträgt.

18. Flammhemmendes Material nach Anspruch 16, das ferner ein funktionelles Additiv umfasst, wobei
das funktionelle Additiv mindestens eines ist ausgewählt aus: einem Verstärkungsmittel, einem Antitropfmittel, einem Stabilisator, einem Pigment, einem Farbstoff, einem Verkohlungskatalysator, einem Dispergiermittel, einem Keimbildner, einem anorganischen Füllstoff und einem Antioxidans.

19. Flammhemmendes Material nach Anspruch 18, wobei der Gewichtsanteil des funktionellen Additivs in dem flammhemmenden Material 5 % bis 40 % beträgt.

20. Flammhemmendes Material nach Anspruch 18, das ferner ein Flammschutzmittel Q umfasst, wobei
das Flammschutzmittel Q aus mindestens einem Stickstoff-Flammschutzmittel und einem Bor-Flammschutzmittel ausgewählt ist.

21. Flammhemmendes Material nach Anspruch 20, wobei der Gewichtsanteil des Flammschutzmittels Q in dem flammhemmenden Material 0,5 % bis 20 % beträgt.

22. Flammhemmendes Material nach Anspruch 16, wobei das thermoplastische Polymer mindestens eines ist ausgewählt aus Polyamid und Polyester.

## Revendications

1. Sel hybride d'acide dialkylphosphinique, choisi parmi au moins un des composés représentés par la formule (1) : 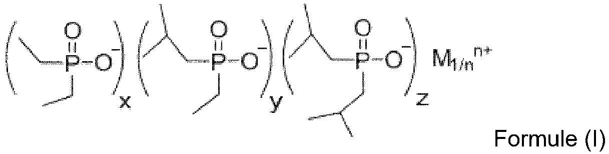
dans laquelle M est un atome central et un ion diéthylphosphinate, un ion éthylisobutylphosphinate et un ion diisobutylphosphinate sont des ligands ;
le M est choisi parmi les éléments métalliques ; l'élément métallique est choisi parmi au moins un des éléments métalliques des groupes IIA, IIIA, IVA et VA, un élément métallique de transition et un élément métallique lanthanide ;
n est un état de valence du métal M ; n est choisi parmi 2, 3 ou 4 ;
0≤x≤0,95 ; 0,05≤y≤0,8 ; et 0≤z≤0,5, x+y+z=l, et x+z>0.

2. Sel hybride d'acide dialkylphosphinique selon la revendication 1, dans lequel l'élément métallique du groupe IIA est choisi parmi au moins Be, Mg, Ca, Sr et Ba ;
l'élément métallique du groupe IIIA est Al ;
l'élément métallique du groupe IVA est Sn ;
l'élément métallique du groupe VA est Sb ;
l'élément métallique de transition est choisi parmi au moins Fe, Zn, Cu, Ti, Zr et Mn ; et l'élément métallique lanthanide est Ce.

3. Sel d'acide dialkylphosphinique hybride selon la revendication 1, dans lequel 0,03≤x≤0,87, 0,13≤y≤0,68, et 0≤z≤0,45.

4. Sel d'acide dialkylphosphinique hybride selon la revendication 3, dans lequel 0,03≤x≤0,7, 0,29≤y≤0,68, et 0,01≤z≤0,45.

5. Procédé de préparation du sel d'acide dialkylphosphinique hybride selon l'une quelconque des revendications 1 à 4, comprenant :
la provocation de la réaction I sur un matériau comprenant un mélange A et une source d'élément métallique M dans une phase aqueuse, et l'obtention du sel d'acide dialkylphosphinique hybride ; dans lequel
le mélange A comprend l'acide diéthylphosphinique et/ou un sel de métal alcalin de l'acide diéthylphosphinique, l'acide éthylisobutylphosphinique et/ou un sel de métal alcalin de l'acide éthylisobutylphosphinique, et l'acide diisobutylphosphinique et/ou un sel de métal alcalin de l'acide diisobutylphosphinique.

6. Procédé de préparation selon la revendication 5, dans lequel la réaction I est effectuée dans des conditions de température de 0°C-250°C, de pression de 0,1 MPa-10 MPa, et de temps de 0,1 h-20 h.

7. Procédé de préparation selon la revendication 5, dans lequel l'obtention du mélange A comprend :
l'introduction de l'éthylène et de l'isobutylène dans une solution aqueuse comprenant de l'acide phosphinique et/ou un sel de métal alcalin de l'acide phosphinique, et un initiateur de radicaux pour la réaction II, et l'obtention du mélange A.

8. Procédé de préparation selon la revendication 7, dans lequel la masse d'eau dans la solution aqueuse représente 10 à 99 % de la masse totale de l'initiateur de radicaux et de l'acide phosphinique et/ou du sel de métal alcalin de l'acide phosphinique.

9. Procédé de préparation selon la revendication 7, dans lequel la réaction II a pour conditions une température de 0°C-250°C, une durée de 0,01 h-50 h, et une pression de 0 MPa-3 MPa.

10. Procédé de préparation selon la revendication 7, dans lequel le rapport molaire entre l'initiateur de radicaux et la quantité totale d'acide phosphinique et/ou de sel de métal alcalin de l'acide phosphinique est de 0,001-0,1: 1.

11. Procédé de préparation selon la revendication 7, dans lequel l'obtention du mélange A comprend :
l'introduction de l'isobutylène dans une solution aqueuse comprenant de l'acide phosphinique et/ou un sel de métal alcalin de l'acide phosphinique et un initiateur de radicaux pour la réaction, après que le rapport molaire entre l'isobutylène introduit et le phosphore total de l'acide phosphinique et/ou du sel de métal alcalin de l'acide phosphinique atteint (y+2z)/l dans la formule (I), l'arrêt de l'introduction de l'isobutylène, puis l'introduction de l'éthylène pour la réaction, et l'obtention du mélange A.

12. Procédé de préparation selon la revendication 7, dans lequel l'obtention du mélange A comprend :
l'introduction de l'isobutylène et d'une partie de l'éthylène dans une solution aqueuse comprenant de l'acide phosphinique et/ou un sel de métal alcalin de l'acide phosphinique et un initiateur de radicaux pour la réaction, dans lequel un rapport molaire de l'éthylène et le phosphore total de l'acide phosphinique et/ou du sel de métal alcalin de l'acide phosphinique est inférieur à (2x+y)/l dans la formule (I), après que le rapport molaire entre l'isobutylène introduit et le phosphore total de l'acide phosphinique et/ou du sel de métal alcalin de l'acide phosphinique atteint (y+2z)/l dans la formule (I), l'arrêt de l'introduction de l'isobutylène, puis l'introduction du reste de l'éthylène pour la réaction, et l'obtention du mélange A.

13. Procédé de préparation selon la revendication 7, dans lequel l'obtention du mélange A comprend :
l'introduction d'une partie de l'éthylène dans une solution aqueuse comprenant de l'acide phosphinique et/ou un sel de métal alcalin de l'acide phosphinique et un initiateur de radicaux, dans lequel un rapport molaire entre l'éthylène et le phosphore total de l'acide phosphinique et/ou le sel de métal alcalin de l'acide phosphinique est inférieur à (2x+y)/l dans la formule (I), après que l'éthylène a complètement réagi, l'introduction de l'isobutylène pour réaction, après que le rapport molaire de l'isobutylène introduit et le phosphore total de l'acide phosphinique et/ou du sel de métal alcalin de l'acide phosphinique atteint (y+2z)/l dans la formule (I), l'arrêt de l'introduction de l'isobutylène, puis l'introduction du reste de l'éthylène pour réaction, et l'obtention du mélange A.

14. Procédé de préparation selon la revendication 5, dans lequel une source d'élément métallique M est sélectionnée parmi au moins un des sels d'élément métallique M.

15. Retardateur de flamme, choisi parmi les sels hybrides d'acide dialkylphosphinique selon l'une quelconque des revendications 1 à 4.

16. Matériau ignifuge, comprenant un retardateur de flamme P et un polymère thermoplastique, dans lequel
le retardateur de flamme P est choisi parmi au moins un des retardateurs de flamme selon la revendication 15.

17. Matériau ignifuge selon la revendication 16, dans lequel le pourcentage en poids du retardateur de flamme P dans le matériau ignifuge est compris entre 1 % et 35 %.

18. Matériau ignifuge selon la revendication 16, comprenant en outre un additif fonctionnel, dans lequel
l'additif fonctionnel est choisi parmi au moins un agent de renforcement, un agent anti-goutte, un stabilisateur, un pigment, un colorant, un catalyseur de carbonisation, un dispersant, un agent de nucléation, une charge inorganique et un antioxydant.

19. Matériau ignifuge selon la revendication 18, dans lequel le pourcentage en poids de l'additif fonctionnel dans le matériau ignifuge est de 5 % à 40 %.

20. Matériau ignifuge selon la revendication 18, comprenant en outre un retardateur de flamme Q, dans lequel
le retardateur de flamme Q est choisi parmi au moins un retardateur de flamme à l'azote et un retardateur de flamme au bore.

21. Matériau ignifuge selon la revendication 20, dans lequel le pourcentage en poids du retardateur de flamme Q dans le matériau ignifuge est compris entre 0,5 % et 20 %.

22. Matériau ignifuge selon la revendication 16, dans lequel le polymère thermoplastique est choisi parmi au moins un polyamide et un polyester.
